## Europäisches Patentamt
## European Patent Office
## Office européen des brevets

(19)

(11) Numéro de publication : **0 166 636**
**B1**

(12) **FASCICULE DE BREVET EUROPÉEN**

(45) Date de publication du fascicule du brevet :
26.04.89

(51) Int. Cl.⁴ : **G 02 B 6/38**

(21) Numéro de dépôt : 85401021.2

(22) Date de dépôt : 23.05.85

(54) Elément de connecteur hermaphrodite pour câble optique.

(30) Priorité : 23.05.84 FR 8408056

(43) Date de publication de la demande :
02.01.86 Bulletin 86/01

(45) Mention de la délivrance du brevet :
26.04.89 Bulletin 89/17

(84) Etats contractants désignés :
CH DE GB IT LI SE

(56) Documents cités :
EP--A-- 0 022 000
FR--A-- 2 291 510
GB--A-- 2 000 323
GB--A-- 2 048 510
US--A-- 3 984 174
NEW ELECTRONICS, vol. 16, no. 2, 25 janvier 1983, pages 60-62, Londres, GB; J. CHALLANS:"Optical fibre connectors for harsch environments"
PATENTS ABSTRACTS OF JAPAN, vol. 7, no. 274 (P-241)(45), 7 décembre 1983 & JP - A - 58 152 215

(73) Titulaire : **RADIALL INDUSTRIE, Société Anonyme dite:**
**101, rue Philibert Hoffmann Zone Industrielle Ouest F-93116 Rosny-Sous-Bois (FR)**

(72) Inventeur : **Zajac, Elie**
**1, Allée des Tulipes**
**F-93220 Gagny (FR)**
Inventeur : **Marchal, Dominique**
**Les Margilliens**
**F-39110 Salins Les Bains (FR)**

(74) Mandataire : **Nony, Michel**
**Cabinet Nony 29, rue Cambacérès**
**F-75008 Paris (FR)**

**EP 0 166 636 B1**

Jouve, 18, rue St-Denis, 75001 Paris, France

## Description

La présente invention est relative à un élément de connecteur pour câble optique, du type hermaphrodite, c'est-à-dire, apte à être assemblé avec un élément de connecteur identique de manière à assurer la liaison de deux câbles optiques, notamment des câbles optiques multifibres, par exemple à huit fibres optiques, l'élément comportant un corps présentant une partie avant pourvue d'une pluralité de logements alvéolaires longitudinaux débouchant dans une face frontale de la partie avant dudit corps pour la réception d'embouts de fibres optiques, ladite face frontale étant réalisée dans une paroi orthogonale à l'axe longitudinal de l'élément de connecteur ; un organe d'alignement réalisé sur la partie avant dudit corps et présentant des portées d'appui aptes à coopérer avec les portées d'appui d'un organe d'alignement identique du second élément de connecteur pour assurer un emboîtement axial des organes d'alignement des deux éléments de connecteur ; un boîtier périphérique entourant au moins partiellement ledit corps et mobile par rapport à celui-ci, d'une part axialement selon au moins deux positions, et d'autre part en rotation entre une position de verrouillage de l'élément de connecteur sur le second élément de connecteur aligné avec lui sous l'effet de moyens de verrouillage coopérant entre les éléments de connecteur, et une position de déverrouillage ; des joints annulaires d'étanchéité entre ledit corps et ledit boîtier pour assurer une étanchéité vis-à-vis de l'intérieur du corps dans toutes les positions relatives du boîtier par rapport au corps ; et un joint annulaire d'étanchéité dans la face frontale du boîtier.

De tels éléments de connecteur de type hermaphrodite pour fibres optiques sont par exemple décrits dans le document WO 84/00617.

L'alignement de tels éléments de connecteur utilise une configuration à broche enfichable et douille coopérante, et le verrouillage s'effectue par vissage du filetage intérieur d'un écrou d'un des éléments sur une portée filetée extérieurement de l'autre élément.

Cela implique de réaliser sur chaque élément un filetage intérieur, et respectivement extérieur qui n'est pas utilisé pour l'assemblage, ce qui accroît la complexité de la fabrication.

En outre, et surtout, les organes d'alignement et de verrouillage, notamment les portées filetées, lorsque les éléments sont désaccouplés, sont sujettes aux pollutions extérieures de sorte que les éléments de connecteur connus présentent une grande sensibilité à la pollution et se prêtent mal à des applications sur le terrain, telles que les applications militaires tactiques.

De telles applications exigent des connecteurs des performances optiques, mécaniques et climatiques élevées, telles qu'en particulier :

— une atténuation moyenne de 2 dB pour une fibre optique de 100 µm de cœur (sans liquide d'indice)

— une grande résistance mécanique (notamment traction de 100 daN entre câble et connecteur, et résistance à l'écrasement par exemple au passage d'un véhicule)

— une étanchéité à l'eau et aux pollutions diverses

— une protection de la partie optique et des portées mécaniques des éléments de connecteur lors du désaccouplement

— une très haute résistance à l'abrasion de la partie optique

— une grande résistance à la corrosion

— un fonctionnement dans une large plage de températures, notamment de - 40 °C à + 70 °C.

outre ces exigences, les éléments de connecteur à usage tactique doivent satisfaire aux normes des essais climatiques et mécaniques classiques (chocs, vibrations, brouillard salin, basses pressions atmosphériques, endurance mécanique, etc...)

La présente invention se propose précisément de réaliser un élément de connecteur hermaphrodite pour câble optique permettant de répondre à toutes ces exigences et offrant ainsi de larges perspectives d'utilisation dans le domaine des applications sur le terrain, l'élément de connecteur selon l'invention étant très facilement nettoyable sur le site d'utilisation.

L'élément de connecteur selon l'invention se caractérise essentiellement par le fait que l'organe d'alignement présente sensiblement une forme de V tronqué d'épaisseur prédéterminée, dont la base présente ladite face frontale qui est munie de dioptres sphériques notamment en saphir pour l'obturation desdits embouts et dont les branches s'étendent sensiblement parallèlement à l'axe longitudinal, ledit organe étant délimité, sur chacun de deux côtés opposés, par une surface latérale externe plane inclinée par rapport à l'axe longitudinal, chaque branche dudit organe présentant par ailleurs, sur ses deux autres côtés opposés, respectivement une surface latérale externe cylindrique et une surface latérale interne plane inclinée, l'ensemble étant agencé de manière à reconstituer un cylindre par emboîtement axial de deux organes d'alignement décalés angulairement de 90° avec des surfaces internes planes des branches de l'organe d'alignement d'un élément de connecteur venant en appui contre les surfaces externes planes de l'organe d'alignement de l'autre élément de connecteur et réciproquement, et par le fait que les moyens de verrouillage comprennent deux dents en saillie de longueurs inégales, réalisées diamètralement opposées sur les surfaces externes cylindriques et aptes à coopérer avec les rainures de longueurs correspondantes réalisées dans la paroi intérieure dudit boîtier du second élément, pendant ladite rotation des boîtiers.

Dans un mode de réalisation particulier, pour assurer la mobilité en rotation et axiale du boîtier par rapport au corps, il est prévu à la périphérie de la partie avant du corps une rainure sensiblement en forme de L comportant une branche disposée circonférentiellement et prolongée à une extrémité par une branche disposée axialement en direction de l'arrière dudit corps, ledit boîtier comprenant une pièce en saillie, notamment une vis-ergot s'engageant dans ladite rainure.

On comprend que tant que la vis-ergot se déplace dans la branche circonférentielle de la rainure, le boîtier tourne par rapport au corps dans une position axialement avancée par rapport à celui-ci, cette position étant en fait la position normale d'utilisation pendant laquelle peuvent s'effectuer les manœuvres de verrouillage et de déverrouillage des éléments de connecteur.

Lorsque la vis-ergot est engagée dans la branche axiale de la rainure, le boîtier recule axialement par rapport au corps dégageant la partie avant de celui-ci, c'est-à-dire notamment l'organe d'alignement, permettant un nettoyage facile des portées mécaniques et de la face optique de l'élément de connecteur.

Le corps de l'élément de connecteur selon l'invention comprend de préférence deux parties réunies, en particulier par vissage, la partie avant comportant notamment comme mentionné précédemment les logements alvéolaires pour la réception des embouts des fibres optiques, les organes d'alignement ainsi que la rainure permettant les mouvements relatifs du boîtier, la partie arrière du corps étant elle-même solidaire à son extrémité arrière d'un mécanisme serre-câble.

Le corps comporte avantageusement en arrière des logements alvéolaires un évidement pour la réception d'un barillet assurant un précentrage des embouts de fibres optiques lors de leur montage dans le corps et leur maintien à l'intérieur de celui-ci.

Le maintien du câble dans le barillet s'effectue de préférence par collage du tirant central du câble dans le barillet.

Dans un autre mode de réalisation particulier les joints annulaires entre le corps et le boîtier comprennent deux joints d'étanchéité annulaires (25, 26) le premier (25) étant logé dans une gorge périphérique de la partie avant du corps (1) de manière à se trouver en retrait de l'extrémité frontale du boîtier lorsque celui-ci est amené en position reculée par rapport au corps, le second joint annulaire (26) étant logé dans une gorge périphérique de la partie arrière du corps (2) en avant de l'extrémité arrière du boîtier lorsque celui-ci se trouve en position avancée par rapport au corps.

Bien entendu il est possible, de manière connue pour ce type de connecteur, d'associer à chaque élément de connecteur un bouchon de fermeture présentant un organe d'alignement et des moyens de verrouillage et d'étanchéité identiques à celui de l'élément de connecteur et susceptible d'obturer l'extrémité de celui-ci, les bouchons de fermeture de deux éléments de connecteur pouvant par ailleurs être assemblés entre eux.

Dans le but de mieux faire comprendre l'invention on va maintenant en décrire à titre d'exemple en aucune manière limitatif un mode de réalisation en se référant au dessin annexé dans lequel :

— la figure 1 est en vue en coupe de deux éléments de connecteur selon l'invention en position de connexion,

— la figure 2 est une vue en perspective, partiellement arrachée en coupe d'un élément de connecteur selon l'invention,

— la figure 3 est une vue frontale de la partie avant du corps d'un élément de connecteur illustré sur les figures 1 et 2,

— la figure 4 est une vue selon la flèche IV de la figure 3,

— la figure 5 est une coupe selon V-V de la figure 3,

— la figure 6 est une coupe selon VI-VI de la figure 5.

En se référant au dessin, on voit que chaque élément de connecteur comprend un corps formé d'une partie avant 1 et d'une partie arrière 2 assemblées par vissage de filetages coopérants 3.

La partie avant de corps 1 qui est représentée de façon plus détaillée aux figures 3 à 6 présente une pluralité de logements alvéolaires 4 longitudinaux débouchant dans une face frontale 5 qui constitue la face optique de l'élément de connecteur.

Dans l'exemple illustré, les alvéoles sont au nombre de huit recevant chacune un embout 6 muni à son extrémité au niveau de la face frontale 5 d'un dioptre sphérique en saphir 9 devant lequel est fixée l'extrémité d'une fibre optique 7 d'un câble optique 8 de manière à former un faisceau optique collimaté.

A l'arrière des alvéoles 4, l'élément de corps 1 présente un évidement 10 recevant la partie avant d'un barillet 11 dont la partie arrière s'engage dans la partie de corps 2. Le barillet est destiné à assurer le précentrage des embouts 6 avant leur insertion simultanée dans les alvéoles 4 du corps 1. Le barillet présente des rainures longitudinales pour guider les fibres entre les embouts et le câble.

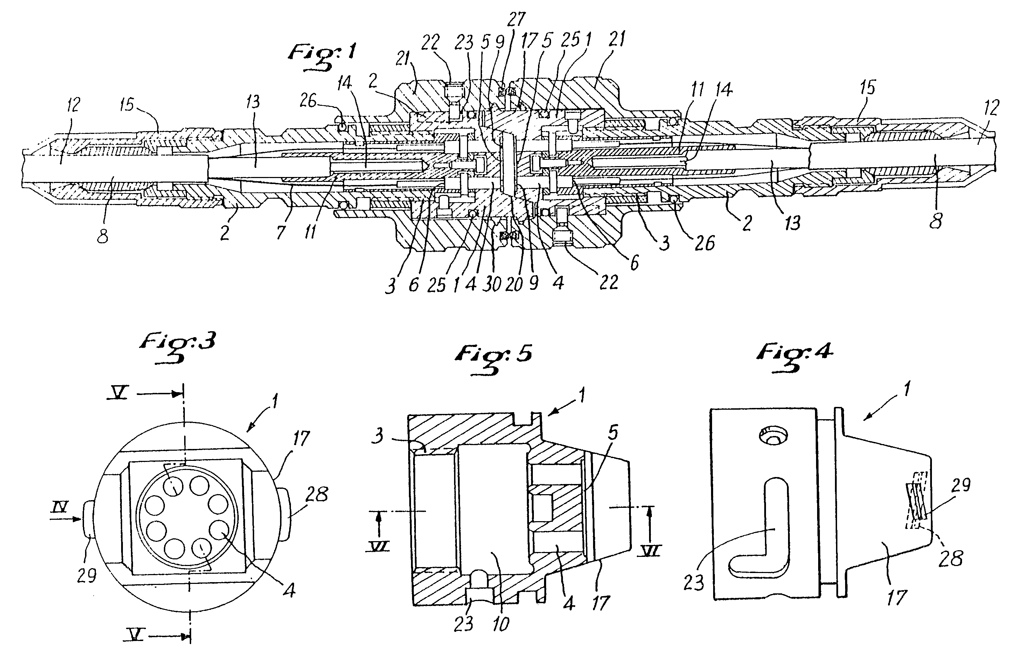

Le câble optique 8 est du type comportant une gaine externe 12, un jonc étoilé 13 dans les encoches duquel sont logées les fibres optiques et un tirant central 14 qui, comme on le voit sur la figure 1, est engagé dans le barillet et fixé à celui-ci par collage.

Le câble optique est immobilisé dans l'élément de connecteur à l'arrière de la partie de corps 2 par un mécanisme serre-câble 15 de type conventionnel.

La partie de corps 1 comporte frontalement un organe d'alignement apte à coopérer avec un organe d'alignement identique d'un second élément de connecteur pour assurer un emboîtement axial et un appui mutuel.

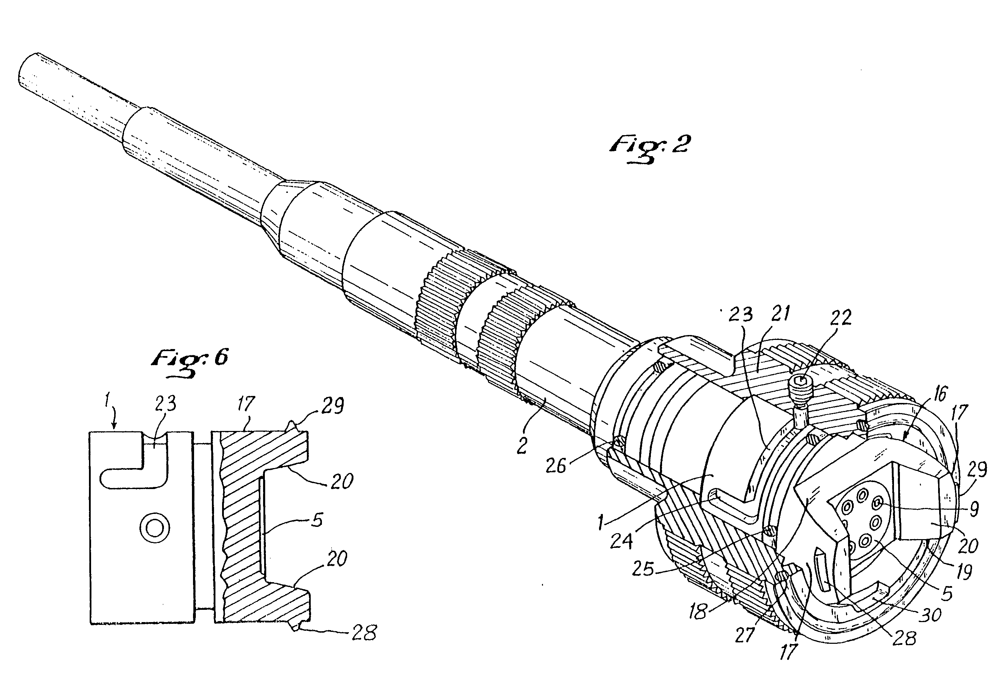

Dans l'exemple illustré, l'organe d'alignement désigné globalement par 16, et qu'on voit le mieux sur la figure 2, présente sensiblement une forme de V tronqué dont les branches présentent chacune une surface externe cylindrique 17, une surface supérieure 18, une surface inférieure 19, et des surfaces internes 20 formées de plans inclinés agencés de manière à reconstituer, comme on le voit sur la figure 1, un cylindre par emboîtement axial de deux organes d'alignement décalés augulairement de 90°, les faces internes des branches de l'organe d'alignement d'un élément de connecteur prenant appui contre les faces supérieure et respectivement inférieure de l'organe d'alignement de l'autre élément de connecteur.

L'élément de connecteur selon l'invention comporte en outre un boîtier périphérique d'assemblage 21 réuni au corps et mobile par rapport à celui-ci grâce à une vis-ergot 22 engagée, comme on le voit le mieux sur la figure 2, dans une rainure de la partie avant de corps 1, rainure qui comporte une branche circonférentielle 23, prolongée vers l'arrière par une branche disposée axialement 24.

Un premier joint d'étanchéité 25 est disposé dans une gorge circonférentielle de la partie avant de corps 1 en regard du boîtier 21 pour assurer l'étanchéité entre le corps de l'élément de connecteur et le boîtier aussi bien dans la position normale de fonctionnement dans laquelle la vis-ergot se trouve dans la branche 23 de la rainure que dans la position de nettoyage dans laquelle la vis-ergot est amenée vers l'arrière de la branche 24 de la rainure provoquant un recul du boîtier par rapport à la face frontale de l'élément de connecteur.

L'étanchéité arrière entre le boîtier 21 et le corps est assurée par un joint d'étanchéité 26 logé dans une gorge circonférentielle de la partie arrière 2 du corps.

Enfin, un joint annulaire 27 assure une étanchéité dans la position d'assemblage, ce joint 27 étant réalisé dans la face frontale du boîtier 21.

Pour le verrouillage de deux éléments de connecteur, il est prévu des moyens de verrouillage coopérants sur la partie avant du corps et sur le boîtier, les moyens de verrouillage du corps d'un élément de connecteur coopérant avec les moyens de verrouillage du boîtier de l'autre élément de connecteur.

Dans l'exemple illustré, ces moyens de verrouillage sont réalisés sous la forme de dents de longueurs inégales 28 et 29 réalisées en sens circonférentiel sur la portée cylindrique 17 de chacun des organes d'alignement 16 des corps et s'engageant dans des filets 30 de longueurs correspondantes de la face interne du boîtier.

Selon l'invention le verrouillage est assurée en un quart de tour du boîtier par rapport au corps de l'élément de connecteur associé.

Les longueurs différentes des dents 28 et 29 et des filets associés 30, permettent en outre un détrompage angulaire nécessaire pour qu'il n'y ait qu'une seule position angulaire possible d'accouplement tout en rendant particulièrement rapides et fiables les opérations de connexion.

La liberté de rotation nécessaire lors du verrouillage est garantie par la longueur de la branche 23 de la rainure dans laquelle se déplace la vis-ergot 22 du boîtier 21.

Grâce à la branche 24 de cette rainure, le boîtier peut reculer sensiblement jusqu'à ce que sa face frontale soit amenée au niveau du joint d'étanchéité 25 ce qui permet de dégager complètement les portées mécaniques et la face optique de l'élément de connecteur afin de faciliter leur nettoyage en cas de pollution.

Bien que l'invention ait été décrite en liaison avec un mode de réalisation particulier il est bien évident qu'elle n'y est nullement limitée et qu'on peut lui apporter de nombreuses variantes et modifications.

**Revendications**

1. Elément de connecteur pour câble optique, du type hermaphrodite, apte à être assemblé avec un second élément de connecteur identique de manière à assurer la liaison de deux câbles optiques, notamment des câbles optiques multifibres, l'élément comportant : un corps (1, 2) présentant une partie avant (1) pourvue d'une pluralité de logements alvéolaires longitudinaux (4) débouchant dans une face frontale (5) de la partie avant dudit corps pour la réception d'embouts (6) de fibres optiques (7), ladite face frontale étant réalisée dans une paroi orthogonale à l'axe longitudinal de l'élément de connecteur ; un organe d'alignement (16) réalisé sur la partie avant dudit corps et présentant des portées d'appui (18, 19, 20) aptes à coopérer avec les portées d'appui (20, 18, 19) d'un organe d'alignement identique du second élément de connecteur pour assurer un emboîtement axial des organes d'alignement des deux éléments de connecteur ; un boîtier périphérique (21) entourant au moins partiellement ledit corps et mobile par rapport à celui-ci, d'une part axialement selon au moins deux positions, et d'autre part en rotation entre une position de verrouillage de l'élément de connecteur sur le second élément de connecteur aligné avec lui sous l'effet de moyens de verrouillage coopérants (28, 29, 30) entre les éléments de connecteur, et une position de déverrouillage ; des joints annulaires d'étanchéité (25, 26) entre ledit corps et ledit boîtier pour assurer une étanchéité vis-à-vis de l'intérieur du corps dans toutes les positions relatives du boîtier par rapport au corps ; et un joint annulaire d'étanchéité (27) dans la face frontale du boîtier (21), caractérisé par le fait que l'organe d'alignement (16) présente sensiblement une forme de V tronqué d'épaisseur prédéterminée, dont la base présente ladite face frontale qui est munie de dioptres sphériques notamment en saphir (9) pour l'obturation desdits embouts (6) et dont les branches s'étendent sensiblement parallèlement à l'axe longitudinal, ledit organe étant délimité, sur chacun de deux côtés opposés, par une surface latérale externe plane (18, 19) inclinée par rapport à l'axe longitudinal, chaque branche dudit organe présentant par ailleurs, sur ses deux autres côtés opposés, respectivement une surface latérale externe cylindrique (17) et une surface latérale interne plane inclinée (20), l'ensemble étant agencé de manière à reconstituer un cylindre par emboîtement axial de deux organes d'alignement décalés angulairement de 90° avec des surfaces internes planes (20) des branches de l'organe d'alignement d'un élément de connecteur venant en appui contre les surfaces externes planes (18, 19) de l'organe d'alignement de l'autre élément de connecteur et réciproquement, et par le fait que les moyens de verrouillage comprennent deux dents en saillie (28, 29) de longueurs inégales, réalisées diamétralement opposées sur les surfaces externes cylindriques et aptes à coopérer avec les rainures (30) de longueurs correspondantes réalisées dans la paroi intérieure dudit boîtier (21) du second élément, pendant ladite rotation des boîtiers.

2. Elément selon la revendication 1, caractérisé par le fait qu'il comprend, pour assurer la mobilité en rotation et axiale du boîtier par rapport au corps, une rainure sensiblement en forme de L (23, 24), réalisée à la périphérie (17) de la partie avant du corps (1), ladite rainure comportant une branche (23) disposée circonférentiellement et prolongée à une extrémité par une branche (24) disposée axialement en direction de l'arrière dudit corps, ledit boîtier (21) comprenant une pièce en saillie, notamment une vis-ergot (22) s'engageant dans ladite rainure.

3. Elément de connecteur selon l'une quelconque des revendications précédentes, caractérisé par le fait que lesdits joints annulaires entre ledit corps et ledit boîtier comprennent deux joints d'étanchéité annulaires (25, 26) le premier (25) étant logé dans une gorge périphérique de la partie avant du corps (1) de manière à se trouver en retrait de l'extrémité frontale du boîtier lorsque celui-ci est amené en position reculée par rapport au corps, le second joint annulaire (26) étant logé dans une gorge périphérique de la partie arrière du corps (2) en avant de l'extrémité arrière du boîtier lorsque celui-ci se trouve en position avancée par rapport au corps.

**Claims**

1. A connector element for optical cable, of hermaphrodite type suitable for being assembled with a second identical connector element so as to ensure the connection of two optical cables, especially multifibre optical cables, the element including : a body (1, 2) exhibiting a front portion (1) provided with a plurality of longitudinal cellular seatings (4) opening out into a front face (5) of the front portion of the said body for the reception of ferrules (6) for optical fibres (7), the said front face being created in a wall at right angles to the longitudinal axis of the connector element ; an alignment member (16) created on the front portion of the said body and exhibiting bearing surfaces (18, 19, 20) suitable for cooperating with the bearing surfaces (20, 18, 19) of an identical alignment member on the second connector element in order to ensure axial interlocking of the alignment members of the two connector elements ; a peripheral casing (21) at least partially surrounding the said body and movable with respect to it, on the one hand axially between at least two positions and on the other hand in rotation between a position providing locking of the connector element onto the second connector element aligned with it under the action of locking means (28, 29, 30) cooperating between the connector elements, and an unlocking position ; annular watertight seals (25, 26) between the said body and the said casing for ensuring watertightnes with respect to the interior of the body in any of the relative positions of the casing with respect to the body ; and an annular watertight seal (27) in the front face of the casing (21), characterized by the fact that the alignment member (16) exhibits substantially the shape of a truncated V of predetermined thickness, the base of which exhibits the said front face which is equipped with spherical diopters (9), in particular of sapphire, for closing off the said ferrules (6) and the arms of which extend substantially in parallel with the longitudinal axis, the said member being defined at each of two opposite sides by an outer plane sideface (18, 19) inclined with respect to the longitudinal axis, each arm of the said member moreover exhibiting at its other two opposite sides a cylindrical outer sideface (17) and an inner inclined plane sideface (20) respectively, the whole being arranged so as to reconstitute a cylinder by axial interlocking of two alignment members offset angularly by 90° with plane inner surfaces (20) of the arms of the alignment member of one connector element coming to bear against the outer plane surfaces (18, 19) of the alignment member of the other connector element and vice versa, and by the fact that the locking means comprise two projecting teeth (28, 29) of unequal length created diametrically opposite on the outer cylindrical surfaces and suitable for cooperating with the grooves (30) of corresponding lengths created in the inner wall of the said casing (21) of the second element during the said rotation of the casings.

2. An element as in Claim 1, characterized by the fact that in order to ensure rotational and axial mobility of the casing with respect to the body it includes a substantially L-shaped groove (23, 24) created at the periphery (17) of the front portion of the body (1), the said groove having one branch (23) arranged circumferentially and prolonged at one end by a branch (24) arranged axially in the direction of the rear of the said body, the said casing (21) including a projecting piece which in particular is a setscrew (22) which engages in the said groove.

3. A connector element as in either of the preceding Claims, characterized by the fact that the said annular seals between the said body and the said casing comprise two annular watertight seals (25, 26), the first (25) being seated in a peripheral groove in the front portion of the body (1) so as to lie set back from the front end of the casing when the latter is brought into a position retracted with respect to the body, the second annular seal (26) being seated in a peripheral groove in the rear portion of the body (2) in front of the rear end of the casing when the latter is lying in a position advanced with respect to the body.

**Patentansprüche**

1. Hermaphroditisches Verbindungselement für optische Kabel, das mit einem zweiten identischen Verbindungselement zur Verbindung zweier optischer Kabel, insbesondere von mehradrigen optischen Kabeln zusammenfügbar ist, bestehend aus einem Anschlußkörper (1, 2), dessen Vorderteil (1) mit einer Mehrzahl zellenförmiger länglicher Lager (4) versehen ist, die in der Stirnfläche (5) des Vorderteils des Anschlußkörpers zur Aufnahme von Fassungen optischer Fasern (7) münden, wobei die Stirnfläche an einer zur Längsachse des Verbindungselementes orthogonalen Wandung verläuft ; einer Zentrierorgan (16), das auf dem Vorderteil vorgesehen ist und Zentrierflächen (18, 19, 20) aufweist, die mit den Zentrierflächen (18, 19, 20) eines identischen Zentrierorgans des zweiten Verbindungselementes zusammenwirken, um ein axiales Ineinanderfügen der Zentrierorgane beider Verbindungselemente sicherzustellen ; einer umfänglichen Muffe (21), die wenigstens teilweise den Anschlußkörper umgibt und relativ zu diesem verstellbar ist und zwar einerseits axial zwischen wenigstens zwei Stellungen sowie andererseits drehverstellbar zwischen einer Verriegelungsstellung, in welcher das Verbindungselement mit dem zweiten Verbindungselement mittels zusammenwirkender Verriegelungselemente fluchtend zusammengehalten ist, und einer Entriegelungsstellung ; ringförmigen Dichtungen (25, 26) zwischen dem Anschlußkörper und der Muffe, um eine Abdichtung des Inneren des Anschlußkörpers relativ zur Muffe in allen Relativpositionen zwischen Körper und Muffe zu erzielen ; und aus einer ringförmigen Dichtung (27) an der Stirnfläche (21) der Muffe, dadurch gekennzeichnet, daß das Zentrierorgan (16) im wesentlichen die Form eines stumpfkegeligen V aufweist, an dessen Basis sich die Stirnfläche (5) befindet, welche mit sphärischen Dioptern (9) insbesondere aus Saphir als Abschluß für die Fassungen (9) versehen ist und dessen Schenkel sich im wesentlichen parallel zur Längsachse erstrecken, daß das Zentrierorgan auf jeder der beiden gegenüberliegenden Seiten eine seitliche plane Außenfläche (18, 19) aufweist, die relativ zur Längsachse geneigt ist, daß jeder Schenkel des Zentrierorgans außerdem auf den beiden anderen gegenüberliegenden Seiten eine äußere zylindrische Seitenfläche (17) und eine innere plane Seitenfläche (20) aufweist, daß das Ganze so gestaltet ist, daß sich ein Zylinder durch das Ineinandergreifen der beiden um 90° zueinander versetzten Zentrierorgane bildet, indem die planen Innenflächen (20) der Schenkel des Zentrierorgans des einen Verbindungselementes gegen die planen Außenflächen (18, 19) des Zentrierorgans des anderen Verbindungselementes und umgekehrt stoßen, und daß die Verriegelungsmittel zwei vorspringende Zähne (28, 29) ungleicher Länge bilden, die einander diametral gegenüberliegend auf den zylindrischen Außenflächen (17) vorgesehen sind und mit Rillen (30) entsprechender Längen beim Drehen der Muffen (21) zusammenwirken.

2. Element nach Anspruch 1, dadurch gekennzeichnet, daß es zur Sicherung der axialen Beweglichkeit und der Drehbeweglichkeit der Muffe in Bezug auf den Anschlußkörper, eine im wesentlichen L-förmige Nut (23, 24) aufweist, die auf dem Umfang des Vorderteils des Anschlußkörpers (1) eingearbeitet ist, daß die Nut aus einem Teilstück (23) besteht, das umfänglich verläuft, und sich an seinem einen Ende in ein axial nach hinten erstreckendes Teilstück (24) fortsetzt, wobei die Muffe (21) einen Absatz, z. B. einen Schraubstift, trägt, der in die Nut eingreift.

3. Verbindungselement nach einem der vorhergehenden Ansprüche, dadurch gekennzeichnet, daß die ringförmigen Dichtungen zwischen dem Anschlußkörper und der Muffe aus zwei Ringdichtungen (25, 26) bestehen, von denen der erste in einer umfänglichen Ausnehmung des Vorderteils des Anschlußkörpers gelagert ist, so daß er sich hinter dem Frontende der Muffe befindet, wenn diese in die rückwärtige Stellung in Bezug auf den Anschlußkörper zurückgeführt wird, während der zweite Ring (26) in einer Ausnehmung am hinteren Teil (2) des Anschlußkörpers gelagert ist, die vor dem rückseitigen Ende der Muffe liegt, wenn diese sich in Bezug auf den Anschlußkörper in der vorgerückten Stellung befindet.

*Fig. 1*

*Fig. 3*

*Fig. 5*

*Fig. 4*

EP 0 166 636 B1

Fig. 2

Fig. 6

2